# EUROPÄISCHE PATENTSCHRIFT

(11) **EP 1 353 088 B1**
(45) Veröffentlichungstag und Bekanntmachung des Hinweises auf die Patenterteilung: **11.05.2005**
(21) Anmeldenummer: 02023506.5
(22) Anmeldetag: 22.10.2002
(51) Int. Cl.: F16G 11/02

(54) **Verfahren zur Herstellung einer Drahtseil-Pressverbindung**
Method for making a swaged splicing of wire rope
Procédé de fabrication d'une jonction de cable métallique par sertissage

(30) Priorität: 15.03.2002 DE 10211747
(43) Veröffentlichungstag der Anmeldung: 15.10.2003
(73) Patentinhaber: KREATO-Fertigungstechnik GmbH, 38836 Dardesheim (DE)
(72) Erfinder: Kock, Andreas, 38170 Schöppenstedt (DE)
(74) Vertreter: Leinung, Günter

(56) Entgegenhaltungen:
- FR-A- 1 257 019
- FR-A- 1 318 940
- FR-A- 1 323 286
- FR-A- 2 086 763
- FR-A- 2 544 041
- GB-A- 1 256 090
- US-A- 2 622 314
- US-A- 3 089 532
- US-A- 3 231 964

## Beschreibung

Die Erfindung betrifft ein Verfahren zur Herstellung einer Pressverbindung zwischen zumindest zwei aneinander anliegenden Drahtseilen durch Verpressung einer die zumindest zwei Drahtseile umschließenden Hülse, siehe Oberbegriff des Anspruchs 1. Die Erfindung betrifft zudem ein Verfahren zum Herstellen einer Pressverbindung eines Seiles mit einer das Seil umschließenden Hülse gemäß dem Oberbegriff des Anspruchs 2.

Es ist bekannt, zur Herstellung derartiger Pressverbindungen Metallhülsen zu verwenden, deren Querschnittskontur durch zwei halbkreisförmige Abschnitte und zwei diese miteinander verbindende parallele gerade Abschnitte gebildet ist. In eine derartige Hülse werden, beispielsweise zum Bilden einer Schlaufe, zwei Seilstränge gesteckt. Die Hülse wird dann unter hohem Druck in eine kreisrunde oder ovale Form verpresst. Durch den Pressvorgang werden die beiden Seilstränge derart gegeneinander und gegen die Innenwandung der Hülse gedrückt, dass eine ausreichend große Reibung zwischen Drahtseilen und Hülse aufgebaut wird, um ein Lösen der Verbindung auch unter Einwirkung hoher Zugkräfte mit Sicherheit zu verhindern. Um den Reibungsschluss noch zu erhöhen, ist es bekannt, die Wandstärke der Hülse in ihren geraden Abschnitten zum Hülseninnenraum hin bereichsweise zu verstärken, um so eine möglichst große Umschlingung der beiden Drahtseile zu erhalten.

Ein Verfahren zur Herstellung einer Drahtseilverpressung ist mit der US 3,231,964 bekannt geworden, bei dem die zu verbindenden Drahtseile mittels einer Hülse umschlossen sind. Die Hülse wird durch entsprechende Druckbeaufschlagung verformt, deren Formänderungen auf die zu verbindenden Drahtseile übertragen werden, um hier eine Verpressung zu erreichen. Durch die Verpressung erfolgt eine Formänderung der Hülse und der verpressten Drahtseile derart, dass die Pressverbindung eine den Presswerkzeugen angepasste Kontur annimmt, somit die Pressverbindung eine linsenförmige Querschnittskontur besitzt.

Der wesentliche Nachteil aller derartiger vorbekannter Verpressungen ist darin zu sehen, dass es häufig zum Bruch der Seile unmittelbar an dem Übergang von der Hülse zum Seil kommt. Zudem sind die bisherigen Hülsen aufwendig und teuer zu fertigen.

Der Erfindung liegt die Aufgabe zugrunde, die eingangs beschriebenen Verfahren hinsichtlich der Wirksamkeit der Pressverbindung und der Kosten zu verbessern.

Ausgehend von dem eingangs beschriebenen Verfahren wird diese Aufgabe erfindungsgemäß durch die Merkmale des Anspruchs 1 bzw. durch die des Anspruchs 2 gelöst.

Dadurch wird die Hülse aus mehr als zwei Richtungen verformt. Aufgrund dieser Verformung kommt es zu einem Fließen des Hülsenmaterials, so dass die volle Bruchkraft der Drahtseile erhalten bleibt.

Zu Unterstützung der Haltbarkeit kann es zweckmäßig sein, wenn vor dem Verpressen in die Hülse zumindest ein Füllelement eingebracht wird.

Der mittlere Bogenabschnitt des linsenförmigen Querschnitts kann durch ein Kreissegment gebildet sein.

Zur Unterstützung der Verpressung und zur Materialeinsparung kann die Querschnittskontur des Hülseninnenraumes der Anzahl der einzuführenden Drahtseile angepasst sein. Bei der Verpressung von zwei aneinander liegenden Drahtseilen empfiehlt sich ein ovaler Hülsen-Innenraum.

Verwenden lassen sich grundsätzlich Hülsen aus metallischen Werkstoffen, beispielsweise Aluminium, aber auch aus nichtmetallischen Werkstoffen, die vorzugsweise fließfähig sind.

Die Erfindung wird anhand der Figuren deutlich.

Es zeigen
- Figur 1: in schaubildlicher Darstellung ein noch halb geöffnetes, aus Ober- und Unterwerkzeug bestehendes Presswerkzeug mit einer eingelegten, noch unverpressten ovalen Hülse, die zwei aneinander liegende Drahtseile umschließt, wobei Ober- und Unterwerkzeug jeweils eine spiegelbildlich gleiche Ausnehmung aufweisen, die gemeinsam eine hexagonale Kontur umschließen;
- **Figur 2**: in Alleinstellung das Unterwerkzeug gemäß Figur 1;
- **Figur 3**: in einer Darstellung gemäß Figur 2 ein Unterwerkzeug mit einer halben linsenförmigen Ausnehmung, geeignet für die Verfahren der vorliegenden Erfindung;
- **Figur 4**: in Alleinstellung die Hülse gemäß Figur 1;
- **Figur 5**: einen Querschnitt durch die in Figur 1 dargestellte Hülse nach ihrer Verpressung mit den beiden verpressten Drahtseilen;
- **Figur 6**: in einer Darstellung gemäß Figur 5 eine Pressverbindung mit eingelegten bzw. mit verpressten Füllelementen;
- **Figur 7**: in einer Darstellung gemäß Figur 5 drei miteinander verpresste Drahtseile;
- **Figur 8**: die Ausführungsform gemäß Figur 7 jedoch mit eingelegten Füllelementen und
- **Figur 9**: eine Schlaufenverpressung in Draufsicht.

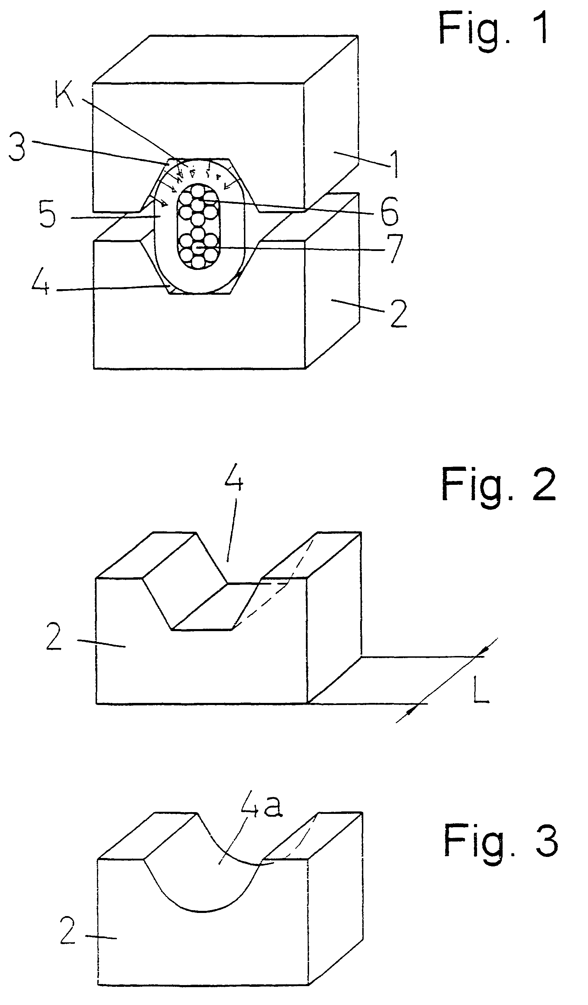

Die Darstellung gemäß Figur 1 zeigt ein geöffnetes Presswerkzeug, das aus einem Oberwerkzeug 1 und einem Unterwerkzeug 2 besteht, die jeweils eine spiegelbildlich gleiche Ausnehmung 3, 4 aufweisen, die gemeinsam eine hexagonale Kontur umschließen. Jede der beiden Ausnehmungen 3, 4 entspricht also einem halben Hexagon, hat also einen trapezförmigen Querschnitt, wie Figur 2 für das Unterwerkzeug 2 erkennen lässt. Alternativ zu der spiegelbildlichen Ausführung der Ausnehmungen 3, 4 ist es möglich, die Werkzeuge der Figuren 2 und 3 dergestalt zu kombinieren, dass ein Unterwerkzeug 2 einem halben Hexagon entspricht, während das dazugehörige Oberwerkzeug 1 eine Ausnehmung 3 in Form einer halben Linse ausgebildet ist. Sofern dies erwünscht ist, kann der Hülsenquerschnitt unten einem halben Hexagon und oben einer halben Linse entsprechen. Entsprechende Abwandlungen und Varianten sind möglich.

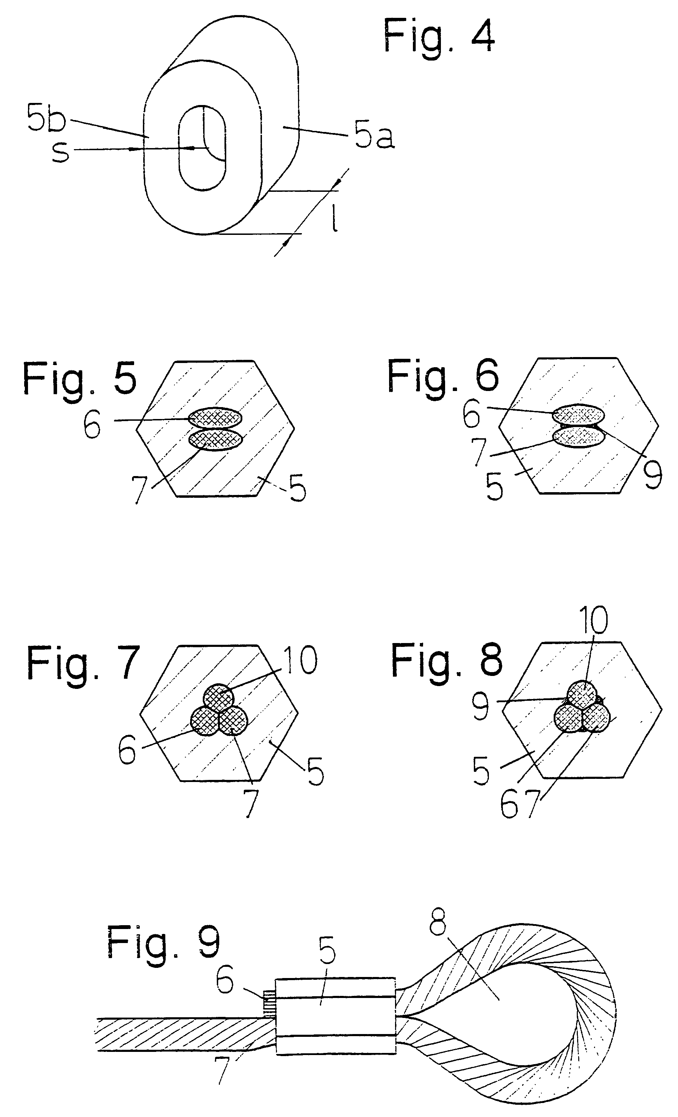

Eingelegt in die Ausnehmung 4 des Unterwerkzeuges 2 ist eine Hülse 5, die einen ovalen Querschnitt aufweist, der in Figur 4 dargestellt ist. Diese Querschnittsform kann sich zusammensetzen aus zwei Halbkreisen, die über gerade Mittelstücke miteinander verbunden sind. Die Rundungen können aber auch durch eine Evolute gebildet sein. Diese Hülse 5 weist eine über ihren Umfang sowie ihre Länge nahezu gleiche Wandstärke s auf.

Gemäß Figur 1 umschließt die ovale Hülse 5 zwei aneinander liegende Drahtseile 6, 7, die jeweils einen Abschnitt einer gemeinsamen Schlaufe 8 bilden können, wie sie in Figur 9 dargestellt ist.

Figur 5 zeigt einen Querschnitt durch die mit dem Presswerkzeug gemäß Figur 1 verpresste Hülse 5 mit den beiden verpressten Drahtseilen 6, 7. Durch die Verpressung hat die Hülse 5 eine den beiden Ausnehmungen 3, 4 des Ober- und Unterwerkzeuges 1, 2 angepasste Außenkontur angenommen. Durch die Abschnitte eines Hexagon bildende Pressflächen wird die in Figur 1 dargestellte Hülse 5 auf ihren sich gegenüberliegenden Rundungsabschnitten über jeweils mehr als 90 Umfangsgrad mit angenähert radial nach innen gerichteten Druckkräften K durch den Schließvorgang des Presswerkzeuges beaufschlagt. Erfindungsgemäß geht es also darum, die durch die Schließkraft des Presswerkzeuges auf die Hülse 5 einwirkenden Druckkräfte nicht nur im obersten und untersten Querschnittspunkt als radiale Druckkräfte in die Hülse 5 einzuleiten, sondern über einen größeren Umfangsbereich eine radiale Orientierung der Druckkräfte K zu erzielen. Dies wird durch die hexagonale Gestaltung des die Hülse 5 aufnehmenden Pressraumes 3, 4, alternativ aber auch durch einen etwa linsenförmig gestalteten Pressraum realisiert, dessen dem Unterwerkzeug 2 zugeordnete Hälfte in Figur 3 dargestellt und mit dem Bezugszeichen 4a versehen ist. Die halbe Linsenkontur 4a wird - abweichend von der Halbkreisform - durch eine flach konkave Kontur gebildet.

Das Verpressen erfolgt, so dass ein Fließen des Hülsenmaterials einsetzt. Hierdurch wird eine formschlüssige Verbindung zwischen Hülse und Drahtseil erzielt. Ergeben sich durch die Form und/oder Anzahl der miteinander zu verpressenden Drahtseile Zwischenräume, die sich durch das Fließen des Hülsenmaterials nicht schließen lassen, oder an beliebiger Stelle, um die Festigkeit zu erhöhen, ist es zweckmäßig, vor dem Verpressen in die Hülse 5 zumindest ein Füllelement 9 einzubringen. Hierbei kann es sich z.B. um einen oder auch mehrere Drähte handeln. Die Position der Füllelemente 9 zwischen den Drahtseilen 6, 7 kann durch Klebemittel oder Fett fixiert werden.

Figur 6 zeigt zwei zusammen mit Füllelementen 9 verpresste Drahtseile 6, 7.

Figur 7 zeigt eine Pressverbindung zwischen drei Drahtseilen 6, 7, 10. Zu dieser Verpressung ist keine oval gestaltete Hülse 5 erforderlich; es könnte ein einfaches Rohr oder ein Rohrabschnitt oder eine Hülse verwendet werden, deren Hohlraum im Querschnitt die Form eines gleichseitigen Dreiecks aufweist, während ihre Außenkontur sogar kreisförmig gestaltet sein könnte.

Figur 8 zeigt ebenfalls drei verpresste Drahtseile 6, 7, 10, deren Verpressung jedoch mit Füllelementen 9 vorgenommen wurde.

Um an zumindest einem Ende der Hülse 5 für die verpressten Drahtseile 6, 7, 10 einen weicheren Übergang zu schaffen, kann es zweckmäßig sein, die Druckkräfte K nur über eine Teillänge der Hülse 5 aufzubringen, deren Gesamtlänge in Figur 4 mit l gekennzeichnet ist. Hierfür wird dann vorzugsweise ein Presswerkzeug 1, 2 verwendet, dessen axiale Länge L kleiner ist als die axiale Länge l der zu verpressenden Hülse 5. Hierdurch bildet sich an dem nicht mit Druckkräften beaufschlagten Hülsenende ein in der Zeichnung nicht näher dargestellter Ringbund, der ein scharfkantiges Umlegen der Drahtseile im Bereich ihres Austritts aus der Hülse verhindert. Alternativ zu der verkürzten Ausgestaltung des Presswerkzeuges 1, 2 ist es möglich, die zu verpressende Hülse 5 nicht vollständig in das Presswerkzeug 1, 2 einzuführen, so dass an einer Seite der Hülse 5 ein Bund entsteht, der nicht mit radialen Druckkräften K beaufschlagt würde.

Die in Figur 4 dargestellte ovale Hülse kann einen Abschnitt eines diese Querschnittskontur aufweisenden gezogenen Rohres darstellen. Es ist aber auch möglich, dass als Hülse ein Rohrabschnitt eines rund hergestellten und dann auf zwei sich gegenüberliegenden Umfangsabschnitten 5a, 5b abgeplatteten Rohres verwendet wird.

Um das Einstecken eines Drahtseilendes in die Hülse 5 zu erleichtern, kann die Hülse an zumindest einem ihrer beiden Enden mit einer in der Zeichnung nicht näher dargestellten Fase versehen sein. Durch die Fasen an einem Ende oder beiden Enden der Hülse 5 wird ein Steifigkeitssprung innerhalb des Drahtseiles 6, 7, 10 vermieden, so dass die Haltbarkeit der Seilverbindung bzw. der Pressverbindung mit einem Hülsenendstück gewährleistet ist. Durchgeführte Zugversuche haben ergeben, dass trotz der Pressverbindung mit einer Hülse das Drahtseil in der Seilmitte reißt, bevor es zu einem Versagen der Pressverbindung oder einem Bruch an der Übergangsstelle von der Hülse zum freiliegenden Seil kommt. Ein Steifigkeitssprung am Übergang von der Hülse 5 zu dem freiliegenden Seil 6, 7, 10 wird ebenfalls durch ein Aufbringen der Druckkräfte K lediglich über eine Teillänge der Hülse 5 realisiert, da auf diese Art und Weise ein Endbereich der Hülse 5 nicht zum Fließen gebracht wird und das Seil 6, 7, 10 entsprechend umgibt bzw. ausfüllt. Die Ausbildung einer Fase und eines Bundes kann alternativ oder in Kombination vorgenommen werden.

Durch die besondere Form der Oberwerkzeuge 1 und Unterwerkzeuge 2 kann auf eine aufwendige Nachbearbeitung der verpressten Hülse 5 verzichtet werden, sowohl bei einer linsenförmigen als auch bei einer hexagonalen Querschnittsform des Presswerkzeuges 1, 2, da keine scharfen Kanten im Bereich der Stoßstellen der Presswerkzeuge 1, 2 entstehen. Falls der Hülsenwerkstoff, der sowohl nach außen als auch nach innen fließt, nicht vollständig die hexagonale Querschnittsform ausfüllt, kommt es zu durchaus erwünschten Abrundungen der hexagonalen Querschnittsform, nicht jedoch zu einer Gradbildung, so dass eine Nacharbeit der Hülse überflüssig wird.

## Patentansprüche

1. Verfahren zur Herstellung einer Pressverbindung zwischen zumindest zwei aneinander anliegenden Drahtseilen (6; 7; 10) durch Verpressen einer die zumindest zwei Drahtseile (6; 7) umschließenden Hülse (5), deren sich gegenüberliegenden Umfangsabschnitte druckbeaufschlagt werden und die Hülse (5) nach ihrer Verpressung eine von der Ausgangsform abweichende Querschnittsform besitzt, bei dem die sich gegenüberliegenden Umfangsabschnitte der Hülse (5) über jeweils mehr als 90 Umfangsgrad mit radial nach innen gerichteten Druckkräften (K) beaufschlagt werden, die Hülse (5) eine linsenförmige Querschnittskontur erhält, **dadurch gekennzeichnet, dass** die linsenförmige Querschnittsform der Hülse (5) mit spitz zulaufenden Rändern ausgebildet ist.

2. Verfahren zur Herstellung einer Pressverbindung zwischen einerseits einem Endabschnitt eines Drahtseiles (7) und einem sich daran anschließenden Abschnitt des Drahtseiles (7) zur Bildung einer Schlaufe (8) und andererseits einer die beiden Abschnitte umschließenden Hülse (5) durch Verpressen, wobei die Hülse (5) zu ihrer Verpressung auf zwei sich gegenüberliegenden Umfangsabschnitten über jeweils mehr als 90 Umfangsgrad mit zumindest angenähert radial nach innen gerichteten Druckkräften beaufschlagt wird, bis ein Fließen des Hülsenmaterials einsetzt und wobei die Hülse (5) durch ihre Verpressung eine linsenförmige Querschnittskontur erhält, die **dadurch gekennzeichnet ist, dass** sie mit spitz zulaufenden Rändern ausgebildet ist.

## Claims

1. Process for making a compression connection between a minimum of two wire ropes (6; 7; 10) that are close and adjacent to one another by the pressing of a sleeve (5) surrounding the minimum of two wire ropes (6; 7), the opposing parts of the periphery of the sleeve (5) are subjected to compression and the sleeve (5) after its compression has a shape of cross section that deviates from its original shape during which the opposing parts of the periphery of the sleeve (5) over a more than a 90 degrees extent of the periphery are each subject to compression forces (K) acting radially inwards, the cross section of the sleeve (5) attains a lenticular exterior shape, **characterised in that** the lenticular shaped cross section of the sleeve (5) is formed to have edges that come to a point.

2. Process for making a compression connection between on the one hand an end section of a wire rope (7) and an adjoining section of the wire rope (7) for forming a loop (8) and on the other hand a sleeve (5) surrounding the two sections by pressing whereby for its pressing the sleeve (5) is subjected to at least compression forces acting approximately radially inwards on two opposing parts of the periphery each over more than a 90 degrees extent of the periphery until yield of the sleeve material takes place, whereby the cross section of the sleeve (5) attains a lenticular exterior shape, which is **characterised in that** it is formed to have edges that come to a point.

## Revendications

1. Procédé permettant de produire un emmanchement entre au minimum deux câbles métalliques situés à proximité l'un de l'autre (6 ; 7 ; 10) après injection d'une gaine (5) enveloppant les câbles métalliques (6 ;7) qui sont au minimum au nombre de deux, dont les sections périphériques se trouvant les unes en face des autres sont mises en pression et la gaine (5) révèle une forme transversale, différente de la forme initiale, après avoir été injectée, moyennant quoi les sections périphériques de la gaine (5), se trouvant les unes en face des autres, sont respectivement admises à plus de 90 degrés circonférentiels avec des forces de pression (K) dirigées dans le sens radial vers l'intérieur, la gaine (5) prend un contour transversal lenticulaire, **caractérisé par le fait que** la forme transversale lenticulaire de la gaine (5) est conçue avec des bords effilés.

2. Procédé permettant de produire un emmanchement entre d'une part une section finale d'un câble métallique (7) et une section contiguë du câble métallique (7) en vue de forme une boucle (8) et d'autre part une gaine (5) enveloppant les deux sections par une injection, moyennant quoi la gaine (5) est admise, pour son injection, sur deux sections périphériques se trouvant l'une en face de l'autre à plus de 90 degrés circonférentiels avec des forces de pression, dirigées au minimum à peu près dans le sens radial vers l'intérieur, jusqu'à ce qu'un flux de matière de gaine soit introduit et que la gaine (5) prenne un contour transversal lenticulaire après avoir été mise en pression, **caractérisé par le fait qu'**elle est conçue avec des bords effilés.
